# EUROPEAN PATENT SPECIFICATION

(11) **EP 4 405 513 B1**
(45) Date of publication and mention of the grant of the patent: **08.10.2025**
(21) Application number: 22744295.1
(22) Date of filing: 06.07.2022
(51) Int. Cl.: C22B 1/00, B09B 3/00, C22B 3/26, C22B 11/00, C22B 15/00, C22B 3/00

(54) **A RECYCLING METHOD FOR RECOVERY OF VALUABLE METAL ELEMENTS FROM PROCESS STREAMS CONTAMINATED WITH IRON**
RECYCLING-VERFAHREN ZUR RÜCKGEWINNUNG VON WERTVOLLEN METALLELEMENTEN AUS MIT EISEN KONTAMINIERTEN PROZESSSTRÖMEN
PROCÉDÉ DE RECYCLAGE POUR LA RÉCUPÉRATION D'ÉLÉMENTS MÉTALLIQUES DE VALEUR À PARTIR DE FLUX DE TRAITEMENT CONTAMINÉS PAR DU FER

(30) Priority: 20.09.2021 GB 202113378
(43) Date of publication of application: 31.07.2024
(73) Proprietor: Gelion Technologies Pty Ltd, North Sydney NSW 2060 (AU)
(72) Inventor: DEACON, Adam William, Billingham TS23 1LB (GB); MARIN FLORIDO, Daniel, Sonning Common RG4 9NH (GB); VALLEJO NAVARRET, Julia, Sonning Common RG4 9NH (GB); TORROBA, Javier, Billingham TS23 1LB (GB)
(74) Representative: Vossius & Partner Patentanwälte Rechtsanwälte mbB
(86) International application number: PCT/GB2022/051726
(87) International publication number: WO 2023/041890

(56) References cited:
- EP-A1- 3 431 619
- KR-A- 20210 113 605
- US-A- 5 855 858
- US-B1- 6 171 564
- US-B2- 7 935 322
- WEI-SHENG CHEN ET AL: "Recovery of Valuable Metals from Lithium-Ion Batteries NMC Cathode Waste Materials by Hydrometallurgical Methods", METALS, vol. 8, no. 5, 6 May 2018 (2018-05-06), pages 1 - 16, XP055721704, DOI: 10.3390/met8050321

## Description

### Field

The present invention relates to a method of recycling valuable metal elements from process streams contaminated with iron. Such process streams include battery materials recycling streams and in particular battery cathode recycling streams. Such process streams also include catalyst materials recycling streams. The methodology may also be applied to other process streams comprising valuable metal elements which are desired to be recovered where the process streams also contain iron contamination. In the context of the present specification, by valuable metal elements we mean metal elements which are desired to be recycled. These include precious metals, such as platinum group metals (PGMs), and also base metals which are in ever increasing demand, such as cobalt and nickel.

### Background

Lithium ion batteries are now ubiquitous in modern society, finding use not only in small, portable devices such as mobile phones and laptop computers but also increasingly in electric vehicles.

A lithium ion battery generally includes a graphite anode separated from a cathode by an electrolyte, through which lithium ions flow during charging and discharging cycles. The cathode in a lithium ion battery may include a lithium transition metal oxide, for example a lithium nickel oxide, lithium cobalt oxide or lithium manganese oxide.

Although lithium ion and other modern rechargeable batteries offer a promising low-carbon energy source for the future, one concern is that the metals required for their manufacture, such as lithium, nickel, cobalt and/or manganese, often command high prices due to their limited availability and difficulty of extraction from natural sources. There is therefore a need for methods which recycle or purify the metals present within batteries, such as the metals present within the cathodes of batteries, to provide materials which may be used as feedstock in battery manufacture.

During battery material recycling processes, an effluent solution is generated containing valuable metal elements such as cobalt and nickel which could be used in the manufacture of new battery materials if they could be extracted in sufficient purity. Such solutions may be generated by leaching from waste battery materials including so-called "black mass", a mixture of valuable metals alongside unwanted impurities. Such solutions therefore include other less desirable or unwanted metal elements or impurities such as iron. The solutions may contain a mixture of metal elements and it is often desirable to extract only one, or a limited number, of these metal elements.

Solvent extraction (also known as liquid-liquid extraction, LLE) is one method which has been used to extract, separate and purify metal elements present in solutions obtained from battery recycling processes. Solvent extraction involves contacting an aqueous phase, containing the metals to be extracted, with an organic phase containing a solvent extractant. After extraction, the phase containing the metals of interest is known as the "extract" and the phase containing the residual impurities is known as the "raffinate". It is often necessary to perform multiple separate extraction steps, using different solvent extractants, in order to selectively extract metals from solutions. This is a costly and complex procedure and it would be desirable to remove unwanted impurities in order to simplify the extraction steps and/or improve the yield and/or purity of the valuable product metal(s) achieved by the extraction processes.

Solid phase extraction (SPE) is another method which has been used to extract, separate and purify metal elements present in solutions obtained from battery recycling processes. Solid phase extraction involves contacting a process stream, containing the metals to be extracted, with a solid phase extractant material (usually comprising one or more functional groups immobilised on a solid support) to selectively remove one or more metal species. The solid phase extractant material may be provided in particulate form, such as beads, granules, or powder through which the aqueous phase is flowed. The particulate material may, for example, be packed into a column through which the aqueous phase is flowed. Alternatively, the solid phase extractant material may be in the form of a monolithic structure having pores or channels through which the aqueous phase is flowed. Depending on the nature of the solid phase media, the nature of the metal species in solution, and the nature of the solvent/eluent contacting the solid phase media, metal species can be selectively adsorbed onto the solid phase media and then desorbed from the solid phase media using a stripping agent in order to effect separation and purification of metal species. One problem with such an approach is that it can be difficult to selectively adsorb and desorb a target value metal of interest without also adsorbing and desorbing one or more contaminants with the target value metal. Another problem with such an approach is that certain metal species can bind strongly to the solid phase media and are difficult to subsequently remove/desorb from the solid phase media. In such cases, metal species build up on the surface of the solid phase media and the solid media is said to be poisoned and requires replacement. Yet another problem is the degradation of the solid phase media over multiple loading and elution cycles.

In addition to the need to recycle valuable metals such as Co and Ni from battery materials recycling streams comprising iron impurities, it is increasingly required to extract and recycle valuable metals from a range of other process streams comprising valuable metal elements and iron impurities, e.g. those derived from spent catalyst materials (e.g. PGM-based catalysts) or other functional materials comprising high value metal elements.

### Summary of the Invention

The present specification proposes to use a solid phase extraction method to selectively remove iron from a process stream comprising valuable metal elements and iron impurities. In this regard, it is known that certain commercially available solid phase extractant materials have an affinity for iron. For example, aminomethylphosphonic acid (AMPA) is a commercially available chelating resin which adsorbs iron. However, ferric ions are very strongly adsorbed by such solid phase extractants poisoning the material. Indeed, the Material Safety Data Sheet for AMPA resins (e.g. Lewatit TP-260) specify to avoid iron in the streams where the resin is going to be used due to poisoning of the resin. As such, prior art methodologies use solid phase extraction media such as AMPA resins as a chelating ligand for base metal (BM) separation in absence of iron to avoid poisoning of the resin.

In light of the above, the problem is how to elute iron from such solid phase extractant materials which strongly adsorb iron. In this regard, the elution of iron from solid phase extractants such as AMPA has been tested using hydrochloric acid and/or sulfuric acid as a stripping agent. However, the elution requires high concentrations of acid which is economically impractical. Moreover, the use of concentrated acids requires expensive materials of construction for process apparatus in order to be compatible with the concentrated acids. Further still, the elution process can be inefficient, leaving significant amounts of iron adhered to the solid media, even using concentrated inorganic acids.

As such, it has been found that the iron can be removed from the solid phase extractants such as AMPA resins by eluting with concentrated inorganic acids, but this approach is impractical for a scaled up industrial process.

In contrast, in accordance with the present specification it has been found that iron can be efficiently stripped from such solid phase extractants by contacting the solid phase extractant material with a stripping agent comprising a solution of organic chelating molecules which form a complex with the iron. As such, it has found to be advantageous to select a combination of a solid phase extractant material and a stripping agent comprising a solution of an organic chelating molecule such that iron can be selectively adsorbed onto the solid phase media and then desorbed from the media without requiring the use of concentrated inorganic acids. An example of such a combination of solid phase media and stripping agent is aminomethylphosphonic acid (AMPA) and ethylenediaminetetraacetic acid (EDTA). In this regard, it has been found that an aqueous solution of EDTA can be used to efficiently strip iron from the AMPA solid phase media making the solid phase media recyclable. EDTA is a non-toxic organic molecule which is soluble in water. As such, the materials of construction for the process apparatus can be the same as for standard aqueous processing streams and the price of EDTA is relatively low. This elution process thus enables the removal of iron from a variety of process streams, making the recovery of value metals easier and cheaper.

The present specification thus provides a method of recycling one or more valuable metal elements from a source material comprising the one or more valuable metal elements, the method comprising:
forming an acidic aqueous recycling feed by acid leaching the source material or a derivative thereof, the acidic aqueous recycling feed comprising the one or more valuable metal elements and iron in solution;
contacting the acidic aqueous recycling feed with a solid phase extractant material which adsorbs the iron, the one or more valuable metal elements remaining in solution;
recovering the one or more valuable metal elements from the acidic aqueous recycling feed via one or more further process steps selected from solvent extraction, solid phase extraction, electrochemical extraction, and precipitation processes; and
recovering the iron from the solid phase extractant material by contacting the solid phase extractant material with a stripping agent comprising a solution of organic chelating molecules which form a complex with the iron.

The solid phase extractant material comprises a solid base material functionalized with a chelating ligand with an affinity for iron. For example, the solid phase extractant material may comprise aminophosphonic acid groups such as aminomethylphosphonic acid (AMPA) groups for adsorbing the iron onto the solid phase media. Alternatively, or additionally, the solid phase extractant material may comprise aminophosphinic groups. Alternatively, or additionally, the solid phase extractant material may comprise sulfonic and phosphonic groups.

The solid base material may comprise silica or a polymer such as polystyrene or a poly-glycidyl methacrylate (poly-GMA). It has been found that silica-based solid phase extractant materials can perform better in this iron extraction application.

The stripping agent comprises organic chelating molecules which form a complex with iron. The organic chelating molecules are preferably soluble in water forming an aqueous solution. The organic chelating molecules may comprise aminoacetic functional groups and/or carboxylic functional groups. The organic chelating molecules may comprise one or more of an EDTA, an oxalate, a phthalic acid, an ascorbic acid, a citric acid, or a derivative thereof. The organic chelating molecules may comprise -COO groups, -COH groups, and/or -NH groups to chelate iron species. For example, the organic chelating molecules may comprise both amino groups and acid groups, with both the amino and acid groups functioning to chelate iron species.

Preferably the organic chelating molecules comprise EDTA, e.g. a salt of EDTA. Such EDTA salts may be selected from the group consisting of a sodium salt of EDTA (e.g. Na₄EDTA), a potassium salt of EDTA, and an ammonium salt of EDTA. In certain methods an ammonium salt of the chelating molecule is preferred as it has a higher solubility than other salts and avoids undesirable precipitation, e.g. of sodium sulfate, which may occur, for example, using certain sodium salts.

The solution of organic chelating molecules may have a molar concentration of organic chelating molecules which is equal to or greater than the molar quantity of iron adsorbed on the solid phase extractant material. Advantageously, an excess of organic chelating molecules is provided to ensure that all Fe is stripped from the solid phase extractant material. Thus, for molecules which chelate with Fe in a 1:1 molar ratio, and where n is the number of moles of Fe adsorbed on the solid phase extractant material, the number of moles of organic chelating molecules in the stripping solution is advantageously greater than n. However, more generally the stoichiometry of the reaction between the organic chelating molecules and Fe must be taken into account, as different chelating molecules have a different stoichiometry of reaction with Fe. As such, for a chelating molecule L with a chelating reaction Fe + xL -> FeLx, the number of moles of chelating molecule should be in excess of x times the number of moles of Fe to ensure an excess of chelating molecules is provided to strip the Fe from the solid phase extractant material. For EDTA x = 1, for citric acid x = 2, and for oxalate x = 3 for example.

Furthermore, it has been found that if the pH of the stripping agent is basic (e.g. pH > 7, > 7.5, or > 8) then the solid phase extractant material, particularly silica-based materials, can be degraded. As such, the pH of the stripping agent is preferably less than or equal to 7.5, 7.0, or 6.8. Further still, if the pH is too low then the organic chelating molecules can protonate and precipitate. This can happen, for example, if the pH is less than 4 in an aqueous solution of stripping agent, although the specific pH limit will depend on the pKa of the chelating molecule. As such, there is a preferred pH range for the stripping agent which ensures that the organic chelating molecules remain in solution while ensuring that the solution is not too basic as to degrade the solid phase extractant material. For certain chelating molecules such as EDTA, a suitable operating pH for the solution of stripping agent may be defined as 4 to 7, advantageously 5.5 to 6.8, to avoid both degradation of the solid phase extractant material and precipitation reactions in the stripping agent. For example, the stripping agent may have a pH of: less than or equal to 7.5, 7.0, or 6.8; equal to or greater than 4.0, 5.0, or 5.5; and/or within a range defined by any of the aforementioned upper and lower limits. However, it is also noted that if the solvent of the stripping agent is a mixture of aqueous and organic solvent, precipitation can be avoided as the organic chelating molecules remain soluble in organic:aqueous solvents. As such, if such a mixed solvent is used for the stripping agent then precipitation can be avoided even at relatively low pH.

The iron contamination within the acidic aqueous recycling feed may be from the source material. That is, the source material may comprise iron and at least some of the iron in the acidic aqueous recycling feed is leached from the source material during the acid leaching step. Additionally, or alternatively, at least some of the iron in the acidic aqueous recycling feed can be due to iron impurities in one or more process fluids / reagents utilized to form the acidic aqueous recycling feed or due to contamination of the acidic aqueous recycling feed from processing equipment. The present methodology is particularly useful when the iron in the acidic aqueous recycling feed is in the Fe(lll) oxidation state, which has been found to be particularly problematic in terms of adversely effecting (i.e. poisoning) solid phase extractant materials such as those comprising sulfonated phosphonic and aminophosphonic groups. The present methodology provides a means of recovering the solid phase extractant materials when Fe(lll) is present in the feed solution.

It may also be noted that the solid phase extraction step for removal of iron is not required to be performed immediately after the acid leaching step. For example, after forming the acidic aqueous recycling feed by acid leaching the source material or a derivative thereof, the acidic aqueous recycling feed can be subjected to one or more intermediate processing steps prior to contacting the acidic aqueous recycling feed with the solid phase extractant material which adsorbs the iron, the one or more intermediate processing steps being selected, for example, from solvent extraction, solid phase extraction, electrochemical extraction, and precipitation processes. However, the iron impurity should be extracted prior to any extraction step which iron interferes with. For example, iron has been found to adversely interact with most of the selective extractants for Co and Ni. Therefore, it is desirable to remove iron before performing extraction of Co and/or Ni. That is, wherein the source material comprises Ni and/or Co, the Ni and/or Co are dissolved in the acidic aqueous recycling feed, and the Ni and/or Co are extracted from the acidic aqueous recycling feed only after the iron is extracted from the acidic aqueous recycling feed using the methodology as described herein.

Further still, after recovering the iron from the solid phase extractant material using the stripping agent to form the complex of organic chelating molecule and iron, it has been found that the complex can be treated with an acid to split the complex and precipitate the chelating molecule. The organic chelating molecule can then be separated (e.g. by filtration) and recycled for re-use in the stripping agent contacting the solid phase extractant material. This recycling of stripping agent is advantageous to reduce cost, improve process efficiency, and reduce environmental impact, particularly if there are any environmental concerns with using a particular stripping agent.

The source materials which can be subjected to the recycling processes described above include functional materials such as those used in commercial products, e.g. electrical devices or catalytic converters, or those used in commercial processes, e.g. industrial chemical production processes. The source material may be a battery material, optionally a battery cathode material such as a lithium ion battery cathode material. In this case, battery waste material is a derivative of the original functional battery material and will typically be in the form of so-called "black-mass" which is subjected to the initial acid leaching step in the process described above. Alternatively, the functional material may be a catalyst material, or other material which typically comprises one or more valuable metals (e.g. one or more platinum group metals). Such materials are in ever increasing demand and there is an ever increasing need to be able to recycle such functional materials for re-use.

The material to be recycled may comprise one or more of Ni, Co, Mn, and Li as is the case, for example, in many lithium ion battery cathode materials. In this case, as previously indicated, removing iron using a recyclable solid media aids in the recovery of the value metals because iron is one of the key impurities that interacts with most of the selective extractants for Co and Ni. Therefore, it is desirable to remove iron before one or more of the other metals, such as Co and/or Ni, are purified.

Other examples where the methodology can be utilized include platinum group metal (PGM) refining process streams and/or nickel containing process streams. In this regard, solid phase extractant media such as AMPA have been found to be selective for Fe over PGMs and Ni. As such, the method can be applied to remove Fe from such process streams. Conventional techniques can subsequently be used to extract the PGMs leaving a clean Ni process stream enabling recovery of nickel as a value base metal in addition to the PGMs.

The processes as described above relate to methods of recycling one or more valuable metal elements from a source material, where the methods comprise forming an acidic aqueous recycling feed by acid leaching the source material or a derivative thereof. In such cases, it has been recognized that such an acid leachate can contain iron impurities and that it is desirable to remove such iron impurities from the acid leachate prior to further processing of the leachate. However, it has also been recognized that various metal processing methods use, as an input stream, an acidic aqueous feed and that such acidic aqueous feeds can be prone to iron contamination even when they are not derived from a leaching process. For example, certain grades of sulfuric acid or HCl can contain ppm levels of iron and this level of iron impurity can detrimentally affect metal processing/purification/extraction steps when using such acid reagents. As such, it would be advantageous to reduce/remove the iron impurity from such acid reagents when used as an input stream for certain metal processing methods.

Thus, according to another aspect of the present specification there is provided a metal processing method which uses, as an input stream, an acidic aqueous feed (e.g. sulfuric acid or hydrochloric acid) comprising iron impurities, the method comprising:
contacting the acidic aqueous feed with a solid phase extractant material which adsorbs the iron in the acidic aqueous feed;
recovering the solid phase extractant material by contacting the solid phase extractant material with a stripping agent comprising a solution of organic chelating molecules which form a complex with the iron, the stripping agent removing the adsorbed iron from the solid phase extractant material;
re-using the recovered solid phase extractant material to remove iron from further acidic aqueous feed;
re-using the stripping agent, after removal of the iron therefrom, to further recover the solid phase extractant material; and
using the resultant acidic aqueous feed from which iron has been removed in a metal dissolve, metal purification, metal extraction, and/or metal recycling process.

It will be understood that optional features of this aspect of the specification (e.g. preferred solid phase extractant materials, stripping agents, and loading and stripping process conditions such as pH) are the same as those described in relation to the previous aspect and will not be repeated here for conciseness.

### Description of the drawings

For a better understanding of the present invention and to show how the same may be carried into effect, certain embodiments of the present invention will now be described by way of example only with reference to the accompanying drawings, in which:
Figure 1 shows an example of a battery materials recycling process;
Figure 2 shows another example of a battery materials recycling process;
Figure 3 shows a schematic representation of three different solid phase extractants evaluated for Fe removal from a process stream comprising valuable metals which are being recycled;
Figure 4 shows a schematic representation of a two-step functionalisation for fabricating a solid phase extractant;
Figure 5 shows a schematic representation of four functional groups evaluated to form solid phase extractants;
Figure 6 shows Fe uptake results using a solid phase extractant for a PGM synthetic feed in 6 M HCl with a range of metal impurities;
Figure 7 shows a comparison of the breakthrough curves for Fe using a silica-based solid phase extractant and a polymer-based solid phase extractant;
Figure 8 shows Fe loading in wt.% (left) and ppm (right) for a solid phase extractant subjected to multiple loading and elution cycles;
Figure 9 shows an elution profile of Fe from a solid phase extractant;
Figure 10 shows breakthrough curves for a range of metals indicating an artefact (circled in Figure 10) seen as a consequence of base metal interacting with NH₄⁺ cations in the column;
Figure 11 shows a schematic representation of several different chelating agents used to test the stripping of Fe from solid phase extractant using a HCl feed;
Figure 12 shows the percentage of Fe eluted using different chelating agents and different solutions of acid;
Figure 13 shows a schematic representation of several different chelating agents used to test the stripping of Fe from a sulfuric acid feed;
Figure 14 shows the percentage of Fe eluted using the different chelating agents for two different solid phase extractant media in batch experiments;
Figure 15 shows a schematic representation of several different chelating agents used to test the stripping of Fe from a sulfuric acid feed in flow experiments;
Figures 16 and 17 show that Fe loading of silica-based solid phase extractant reduces over multiple loading and elusion cycles when a basic solution of stripping agent is utilized;
Figure 18 shows ICP analysis during loading (left) / elution (right) for Si, P and Fe indicating that the silica-based solid phase extractant is degraded by a basic solution of stripping agent;
Figure 19 shows a schematic representation of the degradation of silica in the presence of base;
Figure 20 shows Fe loading results from Fe(II) and Fe(III) solutions using two extractant materials comprising aminophosphinic groups and for three extractant materials comprising aminophosphonic groups; and
Figure 21 shows a schematic of another functional group which can be used as the functional group of the solid phase extractant material for extracting iron.

### Detailed Description

As described in the summary section, the present specification provides a method of recycling one or more valuable metal elements from a source material comprising the one or more valuable metal elements. The method is applied when iron is present as an impurity in a recycling process stream. While the method may be applied to recycling of a range of functional materials which comprise valuable metals such as PGMs and value base metals such as Ni and/or Co, it is particularly useful for lithium ion battery cathode material recycling.

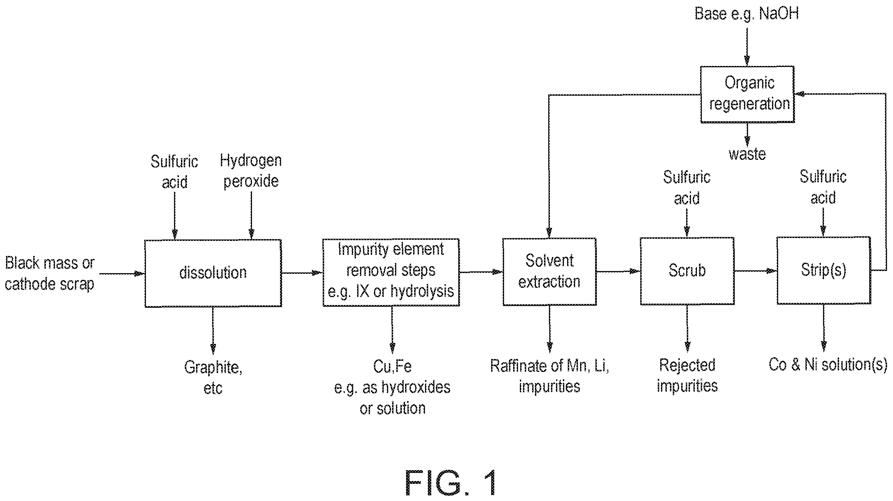

In this regard, Figure 1 shows an example of a battery materials recycling process. The starting material is cathode scrap or so-called "black-mass" which typically comprises Li, Ni, Co, Mn and impurities including Cu and Fe. The material is subjected to an acid dissolution or leaching step to obtain an acidic aqueous recycling feed comprising the constituent metal species in solution. The acidic aqueous recycling feed also comprises impurities such as Fe which can interfere with subsequent extraction steps. As such, it is desirable to selectively remove such impurities prior to further processing of the acidic aqueous recycling feed. An organic solvent extraction step can then be applied to separate Co and Ni (in the organic phase) from Mn and Li. An acid scrub can further be applied to the organic phase to remove any remaining impurities prior to stripping of the Co and Ni into aqueous Co and Ni solutions. The organic phase can be regenerated and recycled for use in further extraction of Co and Ni. The method of Figure 1 enables Co and Ni to be separated from the cathode black mass material. However, further process steps are required if separation of Li and Mn from each other is to be achieved.

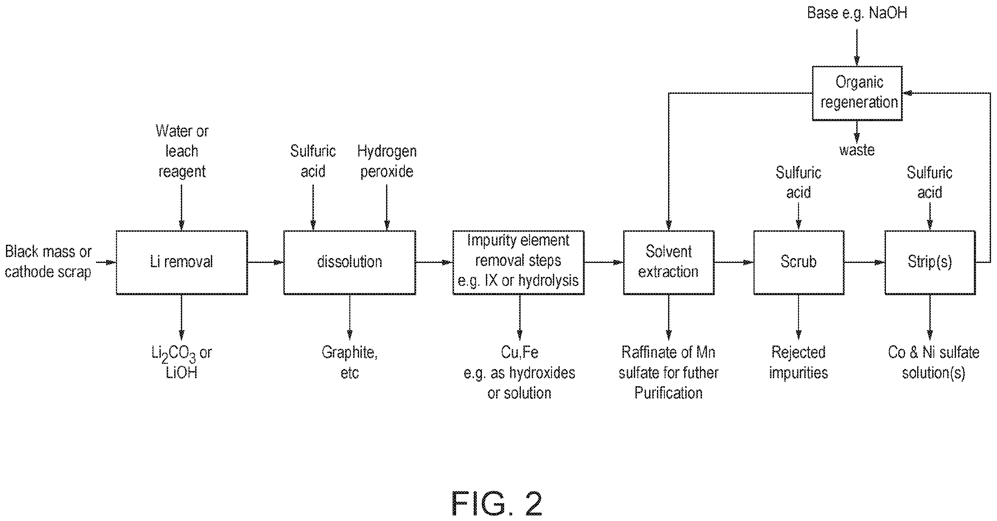

Figure 2 shows another example of a battery materials recycling process. Again, the starting material is cathode scrap or so-called "black-mass" which typically comprises Li, Ni, Co, Mn and impurities including Cu and Fe. However, in this example, the lithium is removed first by treatment with a suitable solvent (e.g. an organic acid such as formic acid) which dissolves Li but not the other metal species. The remaining material is subjected to an acid dissolution or leaching step to obtain an acidic aqueous recycling feed comprising the remaining constituent metal species in solution. Again, the acidic aqueous recycling feed also comprises impurities such as Fe which can interfere with subsequent extraction steps. As such, it is desirable to selectively remove such impurities prior to further processing of the acidic aqueous recycling feed. An organic solvent extraction step can then be applied to separate Co and Ni (in the organic phase) from Mn. An acid scrub can further be applied to the organic phase to remove any remaining impurities prior to stripping of the Co and Ni into aqueous Co and Ni solutions. The organic phase can be regenerated and recycled for use in further extraction of Co and Ni. The method of Figure 2 is advantageous in that it enables an efficient 4-way separation of Li, Mn, Co, and Ni to be achieved.

Removal of Fe has been found to be a critical step that needs to be included in the flowsheets of Figures 1 and 2 ahead of Co/Ni solvent extraction to avoid interferences and contamination. In accordance with the present specification, the removal of Fe from the acidic aqueous recycling feed prior to Co and Ni extraction is achieved by: contacting the acidic aqueous recycling feed with a solid phase extractant material which selectively adsorbs the iron, the one or more valuable metal elements remaining in solution; and recovering the iron from the solid phase extractant material by contacting the solid phase extractant material with a stripping agent comprising a solution of organic chelating molecules which form a complex with the iron.

The solid phase extractant material comprises a solid substrate material coupled to functional groups which are selective for uptake of Fe. The solid substrate material may be a silica or a polymer such as polystyrene or a poly-glycidyl methacrylate (poly-GMA). The functional groups may be aminophosphonic acid functional groups such as aminomethylphosphonic acid (AMPA) groups which have proven to be a selective ligand for the uptake of Fe. Alternatively, or additionally, the functional groups may comprise aminophosphinic groups such as aminomethylphosphinic acid groups. Alternatively, or additionally, the functional groups may comprise sulfonic and phosphonic groups.

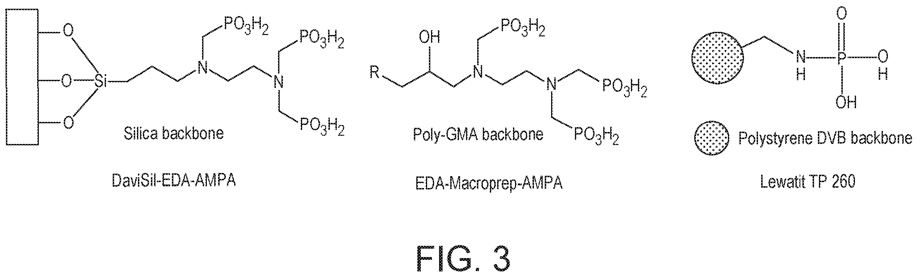

The performance of a range of solid phase media, commercial and in-house, has been investigated for optimal loading, stripping, selectivity, and stability after several loading and elution/stripping cycles. Examples of three different solid phase media evaluated for Fe removal are schematically illustrated in Figure 3. Of the three examples illustrated in Figure 3, the functionalized silica material DAVISIL^{™}-EDA-AMPA has been found to shown better stability than other silica-based materials and faster kinetics than polymer-based materials (e.g. polystyrene and poly-GMA based materials).

### Synthesis of Solid Phase Extraction Media

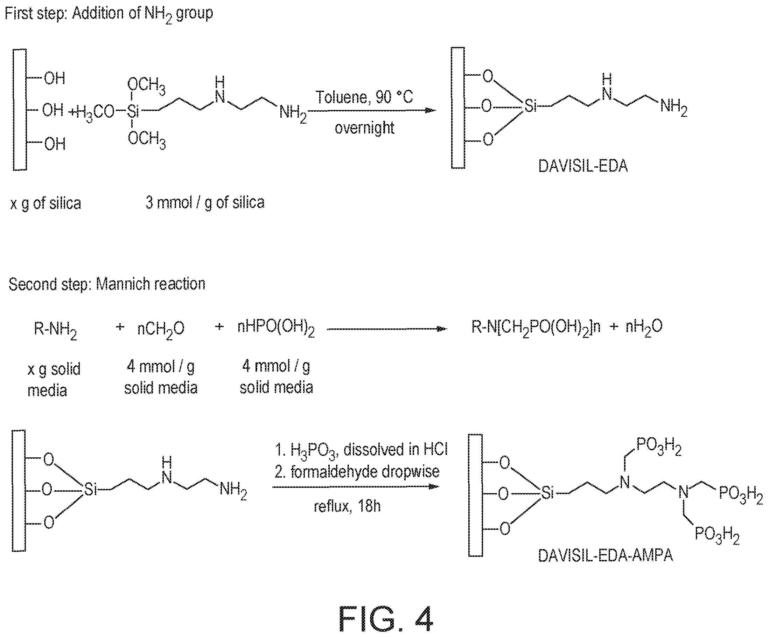

The synthetic procedure for the functionalisation of silica with an AMPA functional group is illustrated in Figure 4. In a first step silica plus 3 mmol of amino-silane per gram of silica are charged into a 3-neck round bottom flask together with solvent (toluene). The mixture is heated to 90°C overnight under continuous stirring. Once the reaction is finished the product is filtered under vacuum and washed with water. If the product requires further purification, this can be achieved by Soxhlet extraction using acetone as a solvent.

In a second step, the functionalized silica from the first step is charged into a 3-neck round bottom flask. Then H₃PO₃ (12 mmol / g silica) is dissolved in a mixture of deionised H₂O / concentrated HCl (ratio 2:1) and introduced into the round bottom flask under continuous stirring (keeping low rpm to avoid breakage of the silica). The reaction mixture is then heated to 60°C. When the temperature is stable, formaldehyde (12 mmol / g silica) is added dropwise to the reaction mixture and the solution is heated to reflux overnight. Once the reaction is finished, the product is allowed to cool and filtered in a Whatman Filtration Device, washed with MeOH / water several times until the solution is clean, and then dried in a vacuum oven.

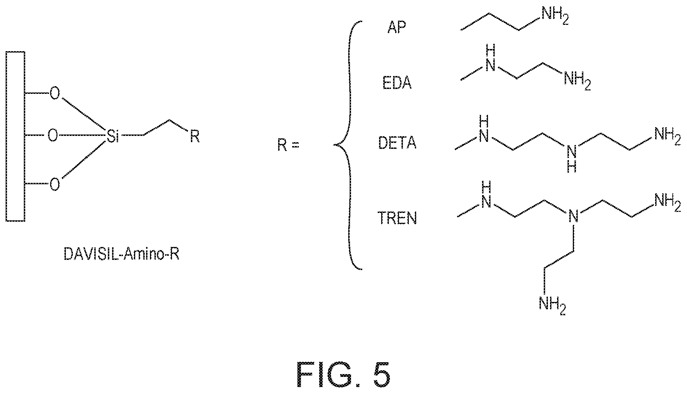

While Figure 4 shows the schematic reaction of the synthesis for EDA-AMPA using silica, other amino groups were also synthesised followed by phosphoric acid functionalisation and evaluation for their Fe removal capacity. Figure 5 shows various examples of different amino groups signified as AP, EDA, DETA, and TREN. EDA was selected as the best candidate because the respective amine is cheaper, and it presents higher capacity for Fe. Nonetheless, AP, DETA and TREN also function effectively.

### Iron Uptake and Elution Experiments

### Fe uptake from a PGM synthetic feed with impurities using commercial material: Lewatit TP 260

Dynamic studies were conducted with a synthetic feed comprising a 6 M HCl leachate of PGMs with impurities to evaluate the selectivity of the solid media. The study was performed using 1.44 g of Lewatit TP 260 for 5h using 0.94 mL min⁻¹ collecting 6 BV h⁻¹. Bed volume (BV) is the total volume of material (both solid and liquid) in the column and relates to the minimum volume of solvent necessary to wet the defined quantity of sorbent within the column.

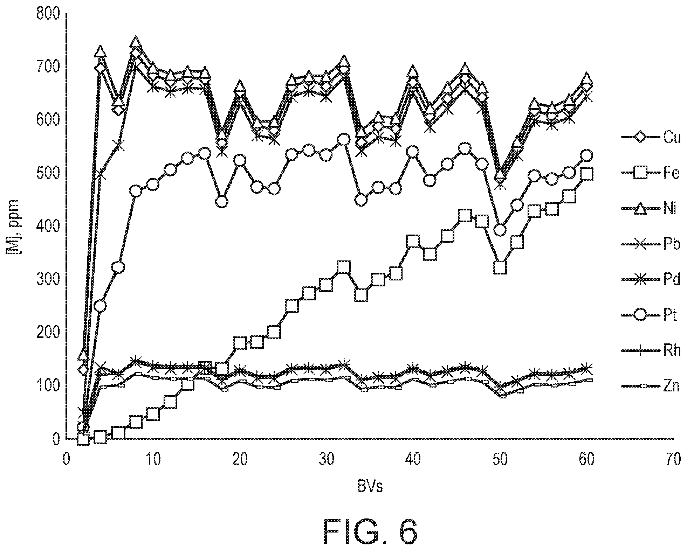

Results for the column experiment using Lewatit TP 260 and synthetic PGM feed are shown in Figure 6. The solid media presents selectivity to Fe over PGMs. Only a small quantity of Pt is adsorbed in the first BVs. However, when Fe starts being adsorbed it displaces the Pt until none is left on the solid media. On the other hand, the rest of the metals (Cu, Ni, Pb, Pd, Rh and Zn) are not adsorbed and their concentration in solution remains constant during the entire process.

The breakthrough curve for Fe is quite wide, which means that the number of BVs of feed which are completely cleaned of Fe are limited. This is explained by the hydrophobic character of the polymer and it can be addressed by reducing the flow rate of the experiment. The fluctuation between experimental points is the error of the instrument, around 5 %.

As such, the selectivity of the solid phase media has been confirmed for Fe over a range of metal species/impurities.

### Comparison of Silica and Polymer Base Media

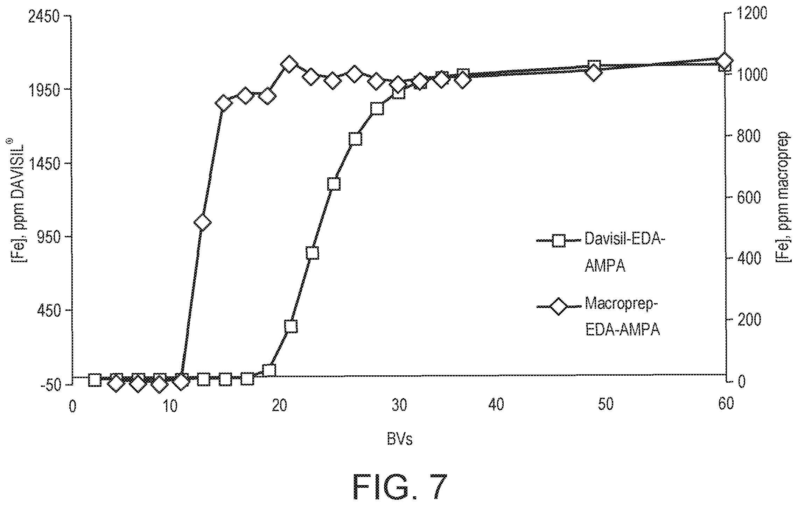

Two synthetic media were tested for Fe removal. Figure 7 compares the breakthrough curves for two media where the functional groups are the same, but the base media are different: DAVISIL^{®}-EDA-AMPA has a silica base media whereas Macro-Prep^{®}-EDA-AMPA has a poly-GMA base media. In this experiment, the column is loaded with Fe and the metal uptake profile recorded in terms of BVs. Figure 7 shows that the macroprep-based media reaches breakthrough loading after 10 BV with a feed concentration of 1 g L⁻¹ Fe. In contrast, the DAVISIL^{®} silica-based media does not reach breakthrough until 18 BV with a feed concentration of 2 g L⁻¹ Fe. The more BV before breakthrough, the greater the window for the other metals to pass through the column.

This indicates that a silica-based solid phase extraction media exhibits improved performance compared to a polymer-based solid phase extraction media.

### Fe uptake and elution from a synthetic battery materials feed using DAVISIL^{®}-EDA-AMPA

2.57 g (dry content 98%) of DAVISIL^{®}-EDA-AMPA was charged into a column of 6 cm length. The material was loaded by a wet method using a 1 (v/v) % H₂SO₄ solution. In every cycle of the experiment, a synthetic feed of approximate 2.3 g L⁻¹ of Fe in 1 (v/v) % H₂SO₄ was passed through the column for 1.5 h at a flow rate of 9.4 mL / 10 min to saturate the solid media with Fe. Once the loading cycle was completed, six BVs of H₂O were passed to flush out the last portion of feed remaining in the column and to reduce the quantity of free SO₄²⁻ anion in the pores. This is because of a precipitation issue when the Na₂H₂EDTA or (NH₄)₂H₂EDTA solution is passed through the column, resulting in the formation of Na₂SO₄ or (NH₄)₂SO₄ (solubility 20 g / 100 ml or 71 g / 100 mL in H₂O, respectively).

The table below summarizes the standard procedure used in load/elute cycles for Fe removal:

| Solution | BVs | Volume (ml) | Solution | BVs | Volume (ml) |
|---|---|---|---|---|---|
| 1% H₂SO₄ | N/A Used for wet packing and tubing calibration | As required | Wash between elution | 2 | 9.4 |
| Feed | 18 | 84.6 | Elution (EDTA) II | 3 | 14.1 |
| Water wash | 3 | 28.2 | Final wash (recondition) | 3 | 14.1 |
| Elution (EDTA) I | 3 | 14.1 | Total | 35 | 164.5 |

The table below summarizes concentration and mass of each metal present in the feed used in the experiment:

| | Al | Co | Cu | Fe | Li | Mg | Mn | Ni | Zn |
|---|---|---|---|---|---|---|---|---|---|
| [M]_{Targeted} (ppm) | 2500 | 1000 | 1000 | 2500 | 1000 | 1000 | 1000 | 1000 | 1000 |
| [M]_{analysed} (ppm) | 1812 | 925 | 676 | 2252 | 946 | 395 | 925 | 944 | 657 |
| M total _{pumped} (mg) | 153.3 | 78.2 | 57.2 | 190.6 | 80.0 | 33.4 | 78.2 | 79.9 | 55.5 |

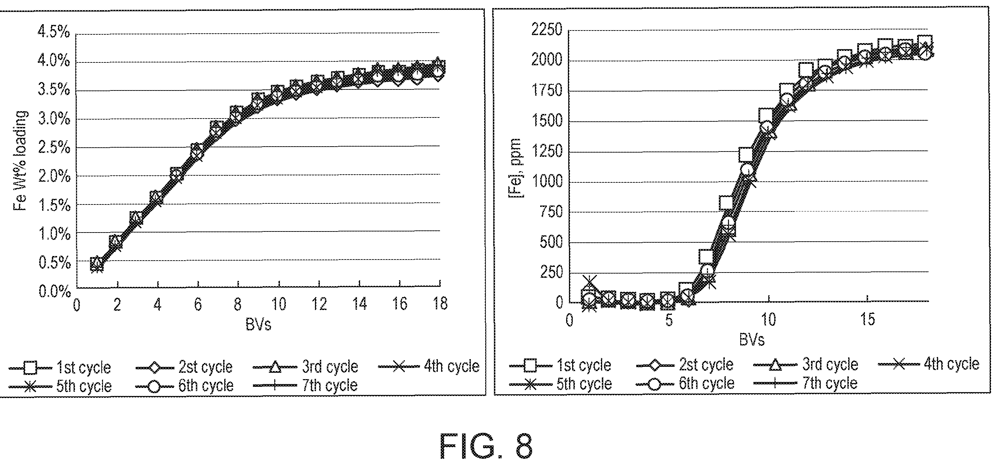

Figure 8 illustrates Fe loading in wt.% (left) and ppm (right) for all the cycles of the experiment. As it can be seen in Figure 8, the loading of Fe is constant over the seven cycles and for all of them five BVs of solution are clean of Fe (less than 1 ppm quantified by ICP-OES). The sixth BV possesses Fe in a range of 15 to 40 ppm depending on the cycle. This equates to a capacity value of 60 mg / g of DAVISIL^{®}-EDA-AMPA.

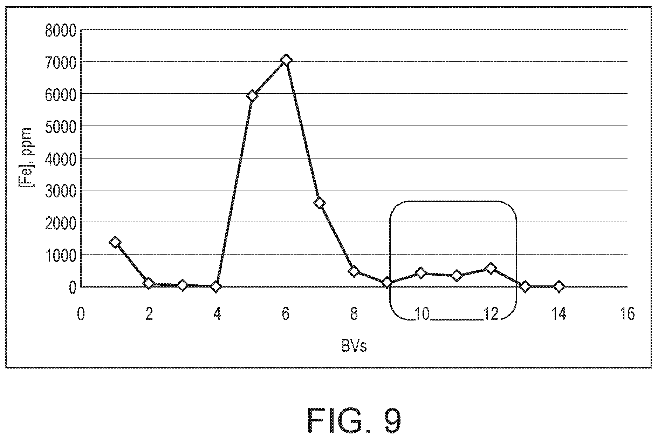

The elution of Fe was investigated using a 0.2 M (NH₄)₂H₂EDTA solution for six BVs. The six BVs of (NH₄)₂H₂EDTA were divided in two cycles with two BVs of water between each set of three. Figure 9 illustrates the elution profile (3rd cycle) of Fe using a solution of 0.2 M (NH₄)₂H₂EDTA. The box in the graph of Figure 9 indicates the second set of elutions. It was observed that the washes in between can help with the elution of Fe, which could be related to a kinetic effect or a change in pH. Once the elution process was finished, the column was regenerated, and the next cycle started. For all cycles the same pattern of elution was found.

After the elution of Fe using (NH₄)₂H₂EDTA and the commencement of the next cycle, a thin layer of colour in the column was observed. The layer runs as the solvent passes through the column and is passed through the column after a few BVs. This artefact was seen in every cycle except the first one and, while not being bound by theory, it is believed to be caused by the interaction of the base metal (Cu, Co, Ni, Mn and Zn) and Mg and Li with the NH₄⁺ cation left in the column after the elution. The mass balance shows that the metals are retained for a short period of time. However, they do not remain in the column and every metal that passed into the column also passed out after loading with the exception of Fe.

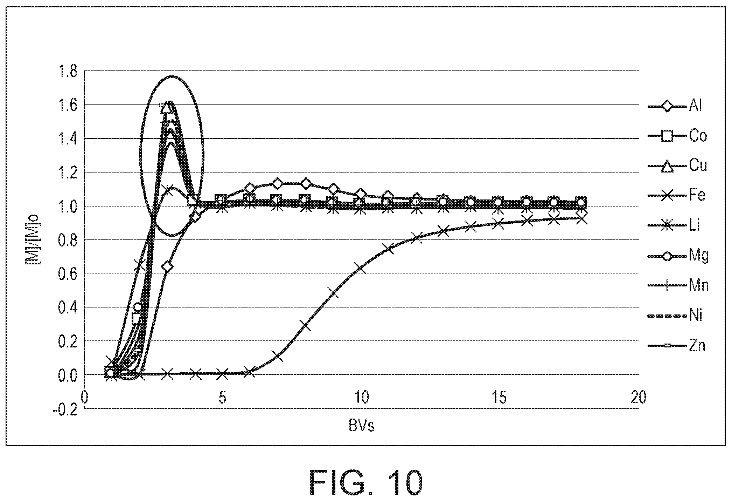

Figure 10 illustrates the breakthrough curve of the 2^{nd} loading showing the artefact (circled in Figure 10) seen as a consequence of the base metal interacting with the NH₄⁺ cations in the column. The mass balance for each cycle has been calculated considering the total metal eluted divided by the total metal pumped over each cycle. The results are shown in the table below. As can be seen, the numbers rarely reach 100 % which implies that the ICP-OES analysis needs to be re-evaluated and the use of an internal standard is necessary to correct the small shift produced by the effect of the interferences of one metal with another.

### Mass balance of the experiment

| | Al | Co | Cu | Fe | Li | Mg | Mn | Ni | Zn |
|---|---|---|---|---|---|---|---|---|---|
| % Mₑₗᵤₜᵢₒₙ 1^{st} cycle | 96 | 98 | 97 | 97 | 96 | 98 | 97 | 98 | 98 |
| % Mₑₗᵤₜᵢₒₙ 2^{nd} cycle | 98 | 100 | 98 | 99 | 98 | 99 | 99 | 99 | 99 |
| % Mₑₗᵤₜᵢₒₙ 3^{rd} cycle | 95 | 98 | 97 | 94 | 97 | 98 | 98 | 98 | 98 |
| % Mₑₗᵤₜᵢₒₙ 4^{th} cycle | 96 | 98 | 96 | 86* | 96 | 97 | 97 | 97 | 97 |
| % Mₑₗᵤₜᵢₒₙ 5^{th} cycle | 95 | 97 | 96 | 91 | 96 | 97 | 96 | 97 | 97 |
| % Mₑₗᵤₜᵢₒₙ 6^{th} cycle | 96 | 98 | 97 | 95 | 96 | 98 | 97 | 97 | 98 |
| % Mₑₗᵤₜᵢₒₙ 7^{th} cycle | 96 | 98 | 97 | 97 | 96 | 98 | 97 | 98 | 98 |

| | | | | | | | | | |
|---|---|---|---|---|---|---|---|---|---|
| **An issue with the dilution of one of the elution samples occurred and the instrument reported only 50 ppm of Fe, which will explain the low value for this cycle.* | | | | | | | | | |

### Different stripping agents

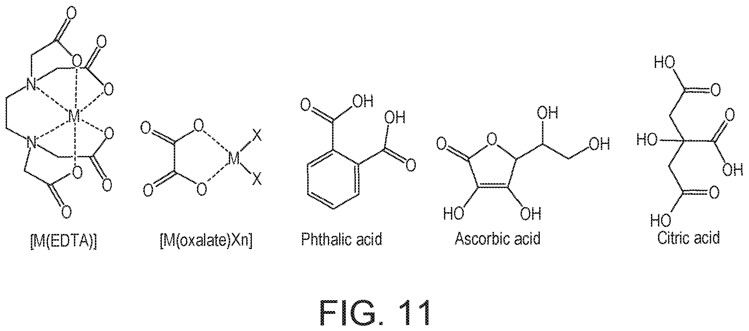

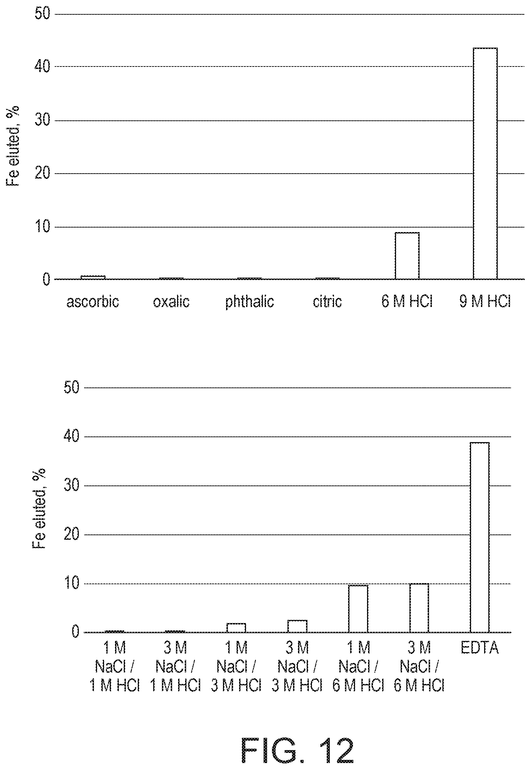

Other stripping agents have been evaluated using batch stripping experiments. Figure 11 shows a schematic representation of several different chelating agents used to test the stripping of Fe. Figure 12 shows the percentage of Fe eluted using different chelating agents and different solutions of acid. The results shown in Figure 12 are the percentage of Fe eluted using the different stripping agent. It is important to bear in mind that these experiments were done using a HCl acid feed where Fe is in the form of FeCl₄⁻ and is strongly bound in the column. Under these circumstances EDTA shows the best results. However, in a feed from H₂SO₄ different results can be achieved as discussed below.

### Stripping experiments from feed in 1% H₂SO₄

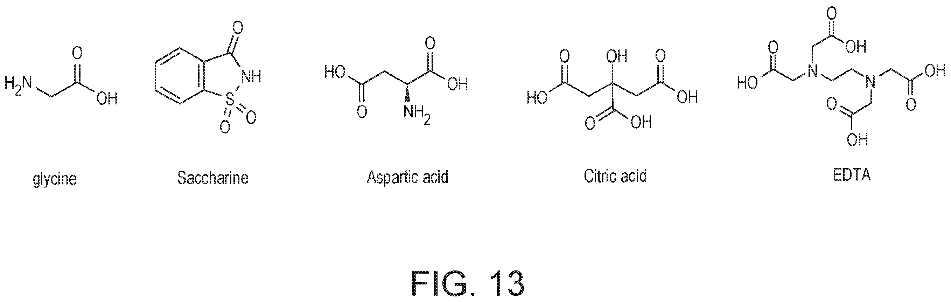

Figure 13 shows a schematic representation of several different chelating agents used to test the stripping of Fe from a sulfuric acid feed. The chelating agents tested included derivates of natural components and/or amino acids with the ability to chelate, such as glycine, saccharine, aspartic acid and citric acid as well as EDTA.

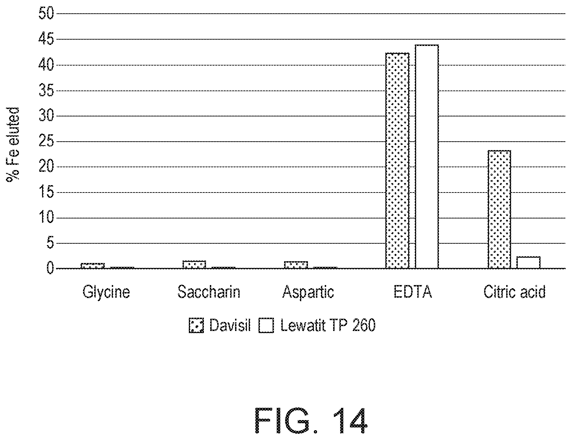

Batch experiments were performed where 0.4 g of loaded material with Fe from a sulfuric acid feed was placed in a series of test tubes and 25 ml of the different chelating agent solutions was added to each tube with the loaded material contacted for 2 h. After that time a change in colour in some solutions could be seen, which indicated the presence of Fe in solution. ICP-OES analysis corroborated that citric acid and EDTA achieved significant elution of Fe. As can be seen in Figure 14, the maximum elution percentage is around 45%. This is an acceptable value for a batch experiment and better optimised results are achieved in flow experiments where fresh solution of the correct concentration is passing through the column for several BVs.

### Flow experiments

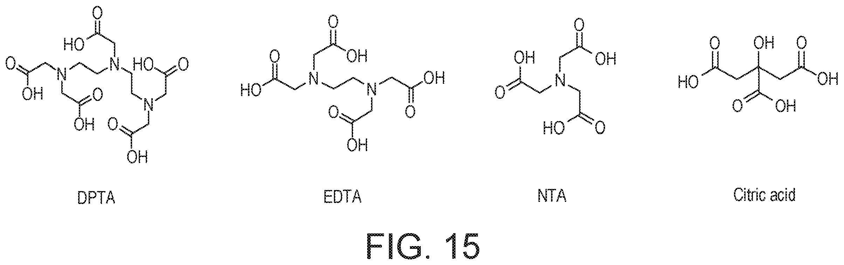

As EDTA shows the best performance as a stripping agent in both types of feed (HCl and H₂SO₄), a flow experiment was performed to evaluate different aminoacetic acid chelating ligands and citric acid. The various chelating agents tested are illustrated in Figure 15. The experiment was performed as a column experiment where the same stripping agent was used for two load-elute cycles and then change, the last stripping agent used being EDTA.

ICP-OES analysis of the samples showed that all of the chelating ligands are capable of achieving good elution of Fe (see table below). NTA was the least effective ligand, probably because the ligand is tetradentate and Fe prefers to be in an octahedral environment. The values above 100% achieved with EDTA show that EDTA can elute the Fe that was retained in the column and the other ligands weren't capable to elute.

| | Al | Co | Fe | Li | Mg | Mn | Ni | Zn |
|---|---|---|---|---|---|---|---|---|
| % Mₑₗᵤₜᵢₒₙ 1^{st} cycle DPTA | 90 | 98 | 73 | 98 | 98 | 98 | 99 | 98 |
| % Mₑₗᵤₜᵢₒₙ 2^{nd} cycle DPTA | 97 | 99 | 87 | 96 | 97 | 97 | 97 | 97 |
| % Mₑₗᵤₜᵢₒₙ 1^{st} cycl NTA | 95 | 98 | 75 | 97 | 97 | 97 | 97 | 97 |
| % Mₑₗᵤₜᵢₒₙ 2^{nd} cycle NTA | 99 | 98 | 90 | 97 | 98 | 97 | 97 | 97 |
| % Mₑₗᵤₜᵢₒₙ 1^{st} cycle CA | 97 | 97 | 105 | 97 | 97 | 98 | 97 | 97 |
| % Mₑₗᵤₜᵢₒₙ 2^{nd} cycle CA | 101 | 101 | 98 | 102 | 103 | 102 | 103 | 104 |
| % Mₑₗᵤₜᵢₒₙ 1^{st} cycle EDTA | 100 | 100 | 107 | 100 | 102 | 101 | 101 | 100 |

### Recyclability of H₄EDTA

For all conditions evaluated, EDTA was the best stripping agent. As such, a dedicated route to recirculate the EDTA after the stripping process has been developed. Once the NH₄FeEDTA complex is in solution, a few drops of acid (in this case H₂SO₄ was used, but other inorganic acids can be utilized) are added and the ligand immediately protonates breaking the iron complex and causing the precipitation of the protonated chelating ligand (H₄EDTA) which is insoluble in water. The solution of Fe₂(SO₄)₃ and the solid protonated chelating ligand can be separated by filtration and the chelating ligand recycled.

### Operating window

Column experiments have been run with different concentrations of acid in the feed and no loss of performance was observed. However, it is important to note that the pH of the elution solution needs to be kept below 7 to avoid the dissolution of the silica. Experiments have proved that pH > 7 causes dissolution of the silica and backpressure problems due to the presence of solids.

### Degradation of silica-based solid extractant using a basic eluting solution

An experiment of 4 loading-stripping cycles was performed using 2.38 g (dry content 98 %) of DAVISIL^{®}-EDA-AMPA, the solid phase extractant being loaded by the wet method using a 1 % H₂SO₄ solution. In every cycle of the experiment, the synthetic feed was passed through the column for 5 hours to saturate the solid media with Fe. The solid media was washed with 3 BVs of H₂O to flush out the last portion of feed remaining in the column then the elution of Fe was investigated using 0.5 M Na₄EDTA solution for 12 BVs. Once the elution process was finished the column was regenerated using 3 BVs of 1 % H₂SO₄, then the next cycle was begun. The table below shows the concentration and mass of metal used in each loading cycle:

| | Co | Fe | Li | Mn | Ni |
|---|---|---|---|---|---|
| [M]_{Targeted} (ppm) | 1000 | 2000 | 2000 | 1000 | 1000 |
| pH | 1.1 | | | | |
| [M]_{Initial} (ppm) 1^{st} cycle | 984 | 2082 | 1868 | 1080 | 983 |
| Total Pumped (mg) 1^{st} cycle | 277.6 | 587.2 | 526.9 | 304.7 | 277.1 |
| [M]_{Initial} (ppm) 2^{nd} cycle | 1080 | 2200 | 2040 | 1150 | 1050 |
| Total Pumped (mg) 2^{nd} cycle | 304.6 | 620.4 | 575.3 | 324.3 | 296.1 |
| [M]_{Initial} (ppm) 3^{rd} cycle | 954 | 1977 | 1758 | 1050 | 950 |
| Total Pumped (mg) 3^{rd} cycle | 269.0 | 557.6 | 495.7 | 296.0 | 268.0 |
| [M]_{Initial} (ppm) 4^{th} cycle | 946 | 1960 | 1769 | 1042 | 941 |
| Total Pumped (mg) 4^{th} cycle | 266.7 | 552.6 | 498.8 | 293.7 | 265.5 |

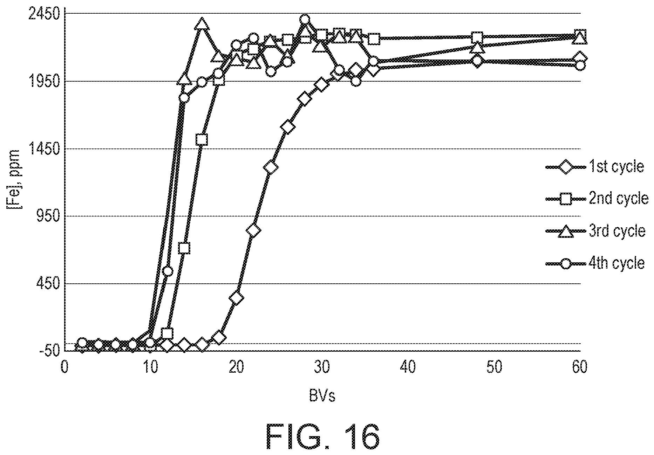

Figure 16 shows the results for the loading over the four cycles. In the first cycle the solid media presents high capacity and a clean breakthrough curve where the first 18 BVs are clean of Fe. However, in the second cycle the silica loses capacity and only 10 BVs are achieved clean of Fe and then in the third and fourth cycle the solid media loses 2 extra BVs of capacity.

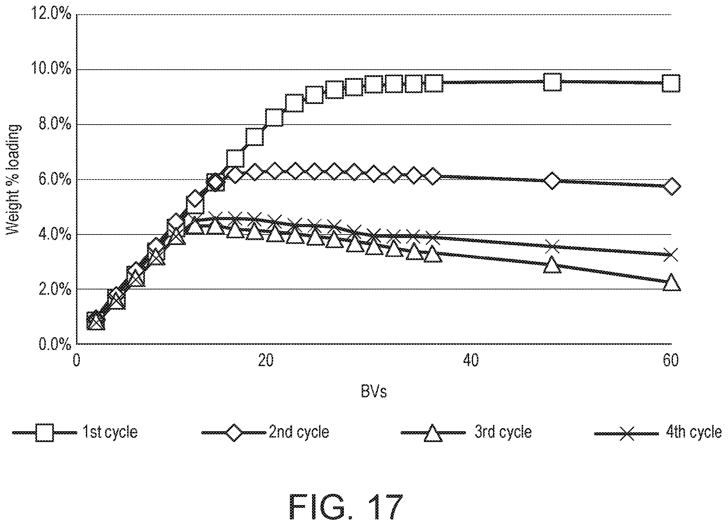

To confirm that the media was losing capacity during the aforementioned experiment, a representation of the Fe loading for every cycle is illustrated in Figure 17 showing the metal loading in weight % for the four cycles. As can be observed in Figure 17, the solid media is losing capacity in every cycle, which could be due to a degradation / dissolution of the silica. To have a better understanding of what was happening, ICP-OES analysis of Si and P were performed during the four cycles. As standards for Si and P were not available, only the intensities were followed.

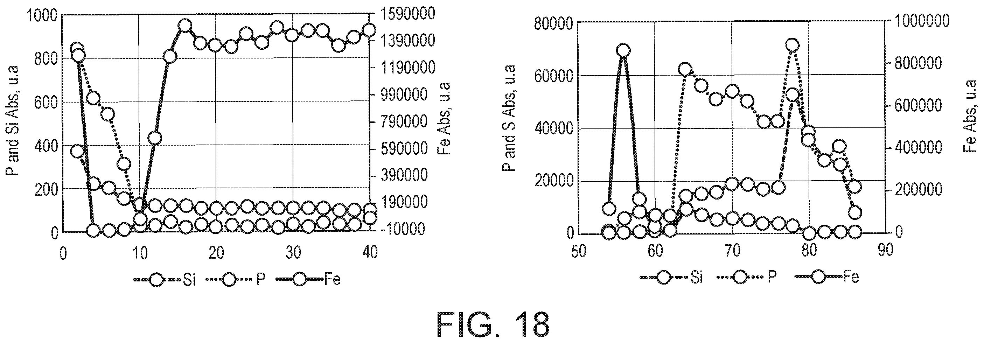

Figure 18 shows the ICP-OES analysis of the intensities during the loading (left) / elution (right) processes for Si, P and Fe. The analysis shows the relationship between the Fe and the Si and P. On the left-hand side the loading process is depicted. In this graph, Si and P come out of the column until the Fe saturates the media. Then, in the elution process depicted on the right-hand side, the Fe comes out during the first BVs. Significantly, in that period neither Si nor P are eluted, suggesting that complexing with Fe protects the functional group from degradation. However, once the Fe elution is complete, the other two elements start coming off the column, indicating that the functional groups were being cleaved from the silica support together with the silica.

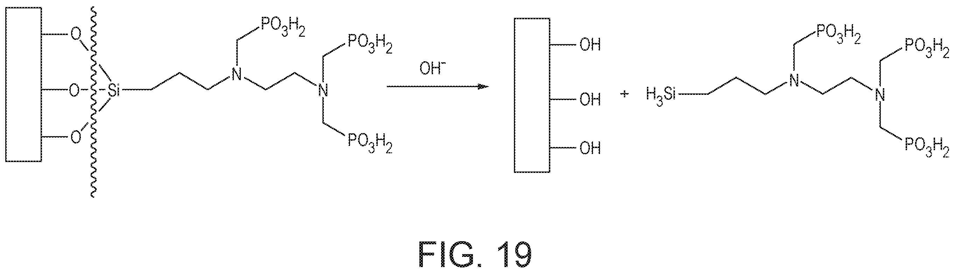

This mode of degradation only occurs in basic pH. A schematic representation of the degradation of silica in the presence of base is illustrated in Figure 19. The results imply that the pH of the Na₄EDTA solution was not appropriate for the silica. The solution of the commercial Na₄EDTA was measured and proved to be at pH 11.5, rather than pH 7 which was intended. Silica is known to degrade rapidly in contact with alkaline solutions and this explains the observed degradation of the solid media. As such, the pH of the stripping agent should be modified to ensure that it is equal to or less than pH 7.

### Other functional groups for solid phase extractant

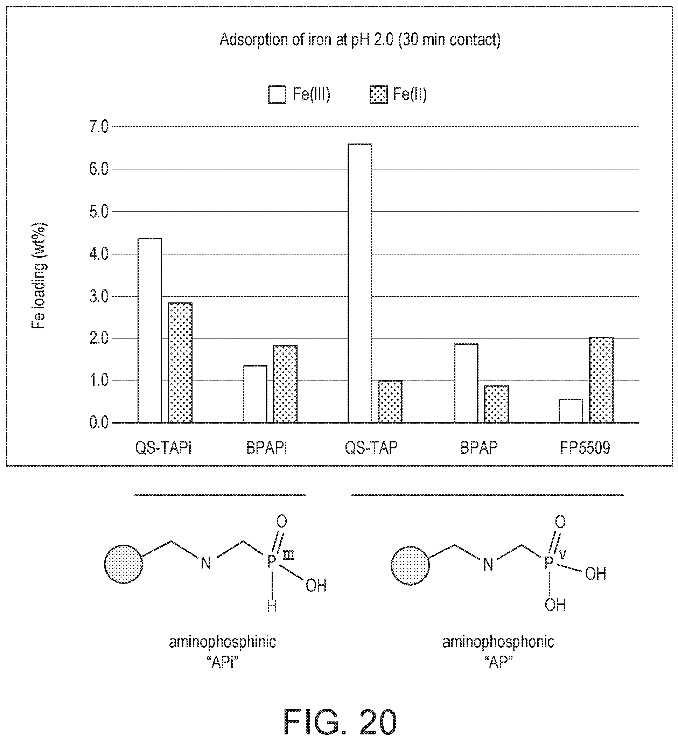

The preceding experiments were performed using a solid phase extractant material comprising aminomethylphosphonic acid (AMPA) groups. It is also possible to use other solid phase extractant materials which have an affinity for iron. For example, a solid phase extractant material comprising aminophosphinic groups can be utilized. Aminophosphinic functionality is analogues to the aminophosphonic materials but with the phosphorous atom in a lower oxidation state: P(V) for phosphonic acids and P(III) for phosphinic acids. The latter may present higher affinity for Fe(II) compared to Fe(III). In this regard, a series of simple one-point adsorption tests in batch was carried out, mixing for 30 minutes 0.1 g of each scavenger with 15 mL of freshly prepared solution of Fe(II) to minimise oxidation to Fe(III), and with a solution of Fe(III) for comparison purposes (500 mg L⁻¹, pH 2.0). Figure 20 shows Fe loading results from the Fe(II) and Fe(III) solutions using two extractant materials comprising aminophosphinic groups and for three extractant materials comprising aminophosphonic groups. The best material for Fe(II) was the aminophosphinic variant QS-TAPi. The best material for extracting Fe(III) was the aminophosphonic variant QS-TAP.

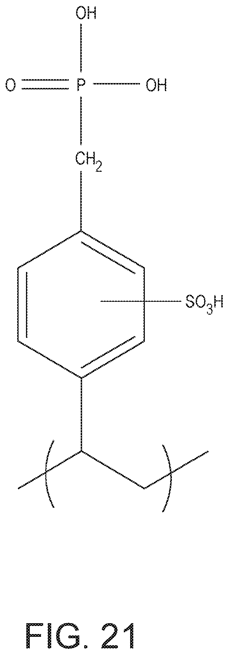

Figure 21 shows a schematic of yet another functional group which can be used as the functional group of the solid phase extractant material for extracting iron. The material is a polymer with a sulfonic and phosphonic group that is known for adsorbing Fe(III). Such a functional material may also be used to uptake Fe and then recovered by elution with a stripping agent as described herein.

While this invention has been particularly shown and described with reference to certain examples, it will be understood to those skilled in the art that various changes in form and detail may be made without departing from the scope of the invention as defined by the appended claims.

## Claims

1. A method of recycling one or more valuable metal elements from a source material comprising the one or more valuable metal elements, the method comprising:
forming an acidic aqueous recycling feed by acid leaching the source material or a derivative thereof, the acidic aqueous recycling feed comprising the one or more valuable metal elements and iron in solution;
contacting the acidic aqueous recycling feed with a solid phase extractant material which adsorbs the iron, the one or more valuable metal elements remaining in solution;
recovering the one or more valuable metal elements from the acidic aqueous recycling feed via one or more further process steps selected from solvent extraction, solid phase extraction, electrochemical extraction, and precipitation processes; and
recovering the iron from the solid phase extractant material by contacting the solid phase extractant material with a stripping agent comprising a solution of organic chelating molecules which form a complex with the iron.

2. A method according to claim 1, wherein the solid phase extractant material comprises a functionalized silica or functionalized polymer material.

3. A method according to claim 1 or 2, wherein the solid phase extractant material comprises aminophosphonic acid groups, aminophosphinic acid groups, or sulfonic and phosphonic groups, or comprises aminomethylphosphonic acid (AMPA) groups and/or aminomethylphosphinic acid groups.

4. A method according to any preceding claim,
wherein the organic chelating molecules of the stripping agent are soluble in water forming an aqueous solution of the organic chelating molecules as the stripping agent, and
wherein the stripping agent has a pH of: less than or equal to 7.5, 7.0, or 6.8; equal to or greater than 4.0, 5.0, or 5.5; and/or within a range defined by any of the aforementioned upper and lower limits.

5. A method according to any preceding claim, wherein the organic chelating molecules comprise -COO groups, -COH groups, and/or -NH groups to chelate iron species, or comprise aminoacetic functional groups and/or carboxylic functional groups.

6. A method according to any preceding claim, wherein the organic chelating molecules comprise one or more of an EDTA, an oxalate, a phthalic acid, an ascorbic acid, a citric acid, or a derivative thereof.

7. A method according to any preceding claim, wherein the organic chelating molecules comprise EDTA or a salt thereof, or is selected from the group consisting of a sodium salt of EDTA, a potassium salt of EDTA, and an ammonium salt of EDTA.

8. A method according to any preceding claim, wherein the source material comprises iron and at least some of the iron in the acidic aqueous recycling feed is leached from the source material during the acid leaching step.

9. A method according to any preceding claim, wherein at least some of the iron in the acidic aqueous recycling feed is due to iron impurities in one or more process fluids utilized to form the acidic aqueous recycling feed or due to contamination of the acidic aqueous recycling feed from processing equipment.

10. A method according to any preceding claim, wherein after forming the acidic aqueous recycling feed by acid leaching the source material or a derivative thereof, the acidic aqueous recycling feed is subjected to one or more intermediate processing steps prior to contacting the acidic aqueous recycling feed with the solid phase extractant material which adsorbs the iron, the one or more intermediate processing steps being selected from solvent extraction, solid phase extraction, electrochemical extraction, and precipitation processes.

11. A method according to any preceding claim,
wherein after recovering the iron from the solid phase extractant material using the stripping agent to form the complex of organic chelating molecule and iron, the complex is treated with an acid to split the complex, and
wherein the organic chelating molecule is then recycled for re-use in the stripping agent contacting the solid phase extractant material.

12. A method according to any preceding claim,
wherein the source material is a battery material, optionally a battery cathode material, or
wherein the source material is a material comprising one or more platinum group metals, optionally a catalyst material.

13. A method according to any preceding claim,
wherein the source material comprises one or both of Ni and Co,
wherein one or both of the Ni and Co are dissolved in the acidic aqueous recycling feed, and
wherein one or both of the Ni and Co are extracted from the acidic aqueous recycling feed after the iron is extracted from the acidic aqueous recycling feed.

14. A metal processing method which uses, as an input stream, an acidic aqueous feed comprising iron impurities, the method comprising:
contacting the acidic aqueous feed with a solid phase extractant material which adsorbs the iron;
recovering the solid phase extractant material by contacting the solid phase extractant material with a stripping agent comprising a solution of organic chelating molecules which form a complex with the iron, the stripping agent removing the adsorbed iron from the solid phase extractant material;
re-using the recovered solid phase extractant material to remove iron from further acidic aqueous feed;
re-using the stripping agent, after removal of the iron therefrom, to further recover the solid phase extractant material; and
using the resultant acidic aqueous feed from which iron has been removed in a metal dissolve, metal purification, and/or metal recycling process.

15. A method according to claim 14,
wherein the acidic aqueous feed is a sulfuric acid or hydrochloric acid feed, and/or
wherein the solid phase extractant material is as defined in any of claims 2 to 3, and/or
wherein the stripping agent is as defined in any of claims 4 to 7.

## Patentansprüche

1. Verfahren zum Recyceln eines oder mehrerer wertvoller Metallelemente aus einem Ausgangsmaterial, das das eine oder die mehreren wertvollen Metallelemente enthält, wobei das Verfahren umfasst:
Bilden eines sauren wässrigen Recycling-Feeds durch Säurelaugen des Ausgangsmaterials oder eines Derivats davon, wobei der saure wässrige Recycling-Feed das eine oder die mehreren wertvollen Metallelemente und Eisen in Lösung umfasst;
Inkontaktbringen des sauren wässrigen Recycling-Feeds mit einem Festphasen-Extraktionsmittel, das das Eisen adsorbiert, wobei das eine oder die mehreren wertvollen Metallelemente in Lösung bleiben;
Rückgewinnen des einen oder der mehreren wertvollen Metallelemente aus dem sauren wässrigen Recycling-Feed über einen oder mehrere weitere Prozessschritte, ausgewählt aus Lösungsmittelextraktion, Festphasenextraktion, elektrochemischer Extraktion und Ausfällungsprozessen; und
Rückgewinnen des Eisens aus dem Festphasen-Extraktionsmittels durch Inkontaktbringen des Festphasen-Extraktionsmittels mit einem Strippmittel, das eine Lösung organischer Chelatbildnermoleküle enthält, die mit dem Eisen einen Komplex bilden.

2. Verfahren nach Anspruch 1, wobei das Festphasen-Extraktionsmittel ein funktionalisiertes Siliciumdioxid oder ein funktionalisiertes Polymermaterial umfasst.

3. Verfahren nach Anspruch 1 oder 2, wobei das Festphasen-Extraktionsmittel Aminophosphonsäuregruppen, Aminophosphinsäuregruppen oder Sulfon- und Phosphongruppen umfasst oder Aminomethylphosphonsäure (AMPA)-Gruppen und/oder Aminomethylphosphinsäuregruppen umfasst.

4. Verfahren nach einem der vorangehenden Ansprüche,
wobei die organischen Chelatbildnermoleküle des Strippmittels in Wasser löslich sind und eine wässrige Lösung der organischen Chelatbildnermoleküle als Strippmittel bilden, und
wobei das Strippmittel einen pH-Wert aufweist: niedriger als oder gleich 7,5, 7,0 oder 6,8; gleich oder höher als 4,0, 5,0 oder 5,5; und/oder innerhalb eines durch eine beliebige der erwähnten Ober- und Untergrenzen definierten Bereichs.

5. Verfahren nach einem der vorangehenden Ansprüche, wobei die organischen Chelatbildnermoleküle -COO-Gruppen, -COH-Gruppen und/oder -NH-Gruppen zum Chelatieren der Eisenarten umfassen oder funktionelle Aminoessigsäuregruppen und/oder funktionelle Carboxylgruppen umfassen.

6. Verfahren nach einem der vorangehenden Ansprüche, wobei die organischen Chelatbildnermoleküle eines oder mehrere von EDTA, einem Oxalat, einer Phthalsäure, einer Ascorbinsäure, einer Zitronensäure oder einem Derivat davon umfassen.

7. Verfahren nach einem der vorangehenden Ansprüche, wobei die organischen Chelatbildnermolküle EDTA oder ein Salz davon umfassen oder ausgewählt sind aus der Gruppe bestehend aus einem Natriumsalz von EDTA, einem Kaliumsalz von EDTA und einem Ammoniumsalz von EDTA.

8. Verfahren nach einem der vorangehenden Ansprüche, wobei das Ausgangsmaterial Eisen umfasst und mindestens ein Teil des Eisens in dem sauren wässrigen Recycling-Feed während des Schritts der Säurelaugung aus dem Ausgangmaterial herausgelaugt wird.

9. Verfahren nach einem der vorangehenden Ansprüche, wobei mindestens ein Teil des Eisens in dem sauren wässrigen Recycling-Feed auf Eisenverunreinigungen in einer oder mehreren Prozessflüssigkeiten, die verwendet werden, um den sauren wässrigen Recycling-Feed zu bilden, oder auf Verunreinigung des sauren wässrigen Recycling-Feeds durch Verarbeitungsvorrichtungen zurückzuführen ist.

10. Verfahren nach einem der vorangehenden Ansprüche, wobei nach Bilden des sauren wässrigen Recycling-Feeds durch Säurelaugen des Ausgangsmaterials oder eines Derivats davon, der saure wässrige Recycling-Feed vor dem Inkontaktbringen des sauren wässrigen Recycling-Feeds mit dem Festphasen-Extraktionsmittel, das das Eisen adsorbiert, einem oder mehreren Zwischenverarbeitungsschritten unterzogen wird, wobei der eine oder die mehreren Zwischenverarbeitungsschritte ausgewählt sind aus Lösungsmittelextraktion, Festphasenextraktion, elektrochemischer Extraktion und Ausfällungsprozessen.

11. Verfahren nach einem der vorangehenden Ansprüche,
wobei nach Rückgewinnen des Eisens aus dem Festphasen-Extraktionsmittel unter Verwendung des Strippmittels, um den Komplex aus organischen Chelatbildnermolekülen und Eisen zu bilden, der Komplex mit einer Säure behandelt wird, um den Komplex aufzuspalten, und
wobei das organische Chelatbildnermolekül dann zur Wiederverwendung im Strippmittel, das mit dem Festphasen-Extraktionsmittel in Kontakt gebracht wird, recycelt wird.

12. Verfahren nach einem der vorangehenden Ansprüche,
wobei das Ausgangsmaterial ein Batteriematerial, gegebenenfalls ein Batteriekathodenmaterial, ist, oder
wobei das Ausgangsmaterial ein Material ist, das ein oder mehrere Metalle der Platingruppe, gegebenenfalls ein Katalysatormaterial, umfasst.

13. Verfahren nach einem der vorangehenden Ansprüche,
wobei das Ausgangsmaterial eines oder beide von Ni und Co umfasst,
wobei eines oder beide von Ni und Co in dem sauren wässrigen Recycling-Feed gelöst werden, und
wobei eines oder beide von Ni und Co aus dem sauren wässrigen Recycling-Feed extrahiert werden, nachdem das Eisen aus dem sauren wässrigen Recycling-Feed extrahiert wurde.

14. Metallverarbeitungsverfahren, das als Eingangsstrom einen Eisenverunreinigungen umfassenden sauren wässrigen Feed verwendet, wobei das Verfahren umfasst:
Inkontaktbringen des sauren wässrigen Feed mit einem Festphasen-Extraktionsmittel, das das Eisen adsorbiert;
Rückgewinnen des Festphasen-Extraktionsmittels durch Inkontaktbringen des Festphasen-Extraktionsmittels mit einem Strippmittel, das eine Lösung von organischen Chelatbildnermolekülen umfasst, die mit dem Eisen einen Komplex bilden, wobei das Strippmittel das adsorbierte Eisen aus dem Festphasen-Extraktionsmittel entfernt;
Wiederverwenden des rückgewonnenen Festphasen-Extraktionsmittels, um Eisen aus weiterem saurem wässrigen Feed zu entfernen;
Wiederverwenden des Strippmittels nach Entfernen des Eisens aus diesem zur weiteren Rückgewinnung des Festphasen-Extraktionsmittels; und
Verwenden des resultierenden sauren wässrigen Feeds, aus dem das Eisen entfernt wurde, in einem Metalllösungsverfahren, Metallreinigungsverfahren und/oder Metallrecyclingverfahren.

15. Verfahren nach Anspruch 14,
wobei der saure wässrige Feed ein Schwefelsäure- oder ein Salzsäure-Feed ist, und/oder
wobei das Festphasen-Extraktionsmittel wie in einem der Ansprüche 2 bis 3 definiert ist, und/oder
wobei das Strippmittel wie in einem der Ansprüche 4 bis 7 definiert ist.

## Revendications

1. Procédé de recyclage d'un ou de plusieurs éléments métalliques de valeur à partir d'un matériau source comprenant les un ou plusieurs éléments métalliques de valeur, le procédé comprenant :
la formation d'une charge de recyclage aqueuse acide par lixiviation acide du matériau source ou d'un dérivé de celui-ci, la charge de recyclage aqueuse acide comprenant les un ou plusieurs éléments métalliques de valeur et du fer en solution ;
la mise en contact de la charge de recyclage aqueuse acide avec un matériau d'extraction en phase solide qui adsorbe le fer, les un ou plusieurs éléments métalliques de valeur restant en solution ;
la récupération des un ou plusieurs éléments métalliques de valeur à partir de la charge de recyclage aqueuse acide par l'intermédiaire d'une ou plusieurs étapes de processus supplémentaires choisies parmi des processus d'extraction par solvant, d'extraction en phase solide, d'extraction électrochimique et de précipitation ; et
la récupération du fer à partir du matériau d'extraction en phase solide par mise en contact du matériau d'extraction en phase solide avec un agent de décapage comprenant une solution de molécules chélatantes organiques qui forment un complexe avec le fer.

2. Procédé selon la revendication 1, dans lequel le matériau d'extraction en phase solide comprend une silice fonctionnalisée ou un matériau polymère fonctionnalisé.

3. Procédé selon la revendication 1 ou 2, dans lequel le matériau d'extraction en phase solide comprend des groupes acide aminophosphonique, des groupes acide aminophosphinique, ou des groupes sulfonique et phosphonique, ou comprend des groupes acide aminométhylphosphonique (AMPA) et/ou des groupes acide aminométhylphosphinique.

4. Procédé selon l'une quelconque des revendications précédentes,
dans lequel les molécules chélatantes organiques de l'agent de décapage sont solubles dans l'eau formant une solution aqueuse des molécules chélatantes organiques en tant qu'agent de décapage, et
dans lequel l'agent de décapage a un pH inférieur ou égal à 7,5, 7,0 ou 6,8 ; égal ou supérieur à 4,0, 5,0 ou 5,5 ; et/ou dans une plage définie par l'une quelconque des limites supérieure et inférieure susmentionnées.

5. Procédé selon l'une quelconque des revendications précédentes, dans lequel les molécules chélatantes organiques comprennent des groupes -COO, des groupes -COH et/ou des groupes -NH pour chélater des espèces de fer, ou comprennent des groupes fonctionnels aminoacétiques et/ou des groupes fonctionnels carboxyliques.

6. Procédé selon l'une quelconque des revendications précédentes, dans lequel les molécules chélatantes organiques comprennent un ou plusieurs parmi un EDTA, un oxalate, un acide phtalique, un acide ascorbique, un acide citrique, ou un dérivé de ceux-ci.

7. Procédé selon l'une quelconque des revendications précédentes, dans lequel les molécules chélatantes organiques comprennent de l'EDTA ou un de ses sels, ou sont choisies dans le groupe constitué par un sel de sodium d'EDTA, un sel de potassium d'EDTA et un sel d'ammonium d'EDTA.

8. Procédé selon l'une quelconque des revendications précédentes, dans lequel le matériau source comprend du fer et au moins une partie du fer dans la charge de recyclage aqueuse acide est lixiviée du matériau source pendant l'étape de lixiviation acide.

9. Procédé selon l'une quelconque des revendications précédentes, dans lequel au moins une partie du fer dans la charge de recyclage aqueuse acide est due à des impuretés de fer dans un ou plusieurs fluides de traitement utilisés pour former la charge de recyclage aqueuse acide ou à la contamination de la charge de recyclage aqueuse acide provenant d'un équipement de traitement.

10. Procédé selon l'une quelconque des revendications précédentes, dans lequel après la formation de la charge de recyclage aqueuse acide par lixiviation acide du matériau source ou d'un dérivé de celui-ci, la charge de recyclage aqueuse acide est soumise à une ou plusieurs étapes de traitement intermédiaires avant la mise en contact de la charge de recyclage aqueuse acide avec le matériau d'extraction en phase solide qui adsorbe le fer, les une ou plusieurs étapes de traitement intermédiaires étant choisies parmi des processus d'extraction par solvant, d'extraction en phase solide, d'extraction électrochimique et de précipitation.

11. Procédé selon l'une quelconque des revendications précédentes,
dans lequel, après récupération du fer à partir du matériau d'extraction en phase solide à l'aide de l'agent de décapage pour former le complexe de molécule chélatante organique et de fer, le complexe est traité avec un acide pour diviser le complexe, et
dans lequel la molécule chélatante organique est ensuite recyclée pour être réutilisée dans l'agent de décapage en contact avec le matériau d'extraction en phase solide.

12. Procédé selon l'une quelconque des revendications précédentes,
dans lequel le matériau source est un matériau de batterie, éventuellement un matériau de cathode de batterie, ou
dans lequel le matériau source est un matériau comprenant un ou plusieurs métaux du groupe du platine, éventuellement un matériau catalyseur.

13. Procédé selon l'une quelconque des revendications précédentes,
dans lequel le matériau source comprend l'un ou les deux parmi Ni et Co,
dans lequel l'un ou les deux parmi Ni et Co sont dissous dans la charge de recyclage aqueuse acide, et
dans lequel l'un ou les deux parmi Ni et Co sont extraits de la charge de recyclage aqueuse acide après que le fer a été extrait de la charge de recyclage aqueuse acide.

14. Procédé de traitement de métaux qui utilise, comme flux d'entrée, une charge aqueuse acide comprenant des impuretés de fer, le procédé comprenant :
la mise en contact de la charge aqueuse acide avec un matériau d'extraction en phase solide qui adsorbe le fer ;
la récupération du matériau d'extraction en phase solide par mise en contact du matériau d'extraction en phase solide avec un agent de décapage comprenant une solution de molécules chélatantes organiques qui forment un complexe avec le fer, l'agent de décapage éliminant le fer adsorbé du matériau d'extraction en phase solide ;
la réutilisation du matériau d'extraction en phase solide récupéré pour éliminer le fer d'une autre charge aqueuse acide ;
la réutilisation de l'agent de décapage, après en avoir éliminé le fer, pour récupérer davantage le matériau d'extraction en phase solide ; et
l'utilisation de la charge aqueuse acide résultante dont le fer a été éliminé dans un processus de dissolution de métal, de purification de métal et/ou de recyclage de métal.

15. Procédé selon la revendication 14,
dans lequel la charge aqueuse acide est une charge d'acide sulfurique ou d'acide chlorhydrique, et/ou
dans lequel le matériau d'extraction en phase solide est tel que défini dans l'une quelconque des revendications 2 à 3, et/ou
dans lequel l'agent de décapage est tel que défini dans l'une quelconque des revendications 4 à 7.
